# EUROPEAN PATENT APPLICATION

(11) **EP 2 639 728 A1**
(43) Date of publication of application: **18.09.2013**
(21) Application number: 11840353.4
(22) Date of filing: 21.09.2011
(51) Int. Cl.: G06F 21/20, H04L 9/32

(54) **USER VERIFICATION DEVICE AND USER VERIFICATION METHOD**

(30) Priority: 08.11.2010 JP 2010249771
(71) Applicant: NTT DOCOMO, INC., Chiyoda-ku, Tokyo 100-6150 (JP)
(72) Inventor: KATO Sadaatsu, Tokyo 100-6150 (JP); ASHIBE Maiko, Tokyo 100-6150 (JP)
(74) Representative: Viering, Jentschura & Partner
(86) International application number: PCT/JP2011/071527
(87) International publication number: WO 2012/063558

(57) **Abstract**

It is an object of the present invention to provide a user verification device and a user verification method that perform appropriate user verification in accordance with a network environment. A user verification device includes a storage module for storing a verification method and user information utilized for user verification, a reception module for receiving a request for user verification, a network type determination module for determining a network type that the user verification device uses for communication, a location information acquisition module for acquiring location information of the user verification device, a verification method extraction module for extracting the stored verification method based on the determined network type, a user information extraction module for extracting the stored user information based on the determined network type and the acquired location information, and a processing module for processing user verification based on the extracted verification method and the extracted user information.

## Description

### Technical Field

The present invention relates to a user verification device and a user verification method.

### Background Art

In recent years, communication devices that switch between a plurality of networks to perform communication have been known. For example, a wireless terminal device described in Patent Literature 1 switches to communication on PHS in the case where the signal strength during communication in a wireless LAN has fallen below a threshold value.

### Citation List

### Patent Literature

[Patent Literature 1] Japanese Patent Application Laid-Open Publication No. 2004-242058

### Summary of Invention

### Technical Problem

Generally, in cases where a communication device switches between a plurality of networks to perform communication, user verification of a user of the communication device is performed when the communication is performed in each network. Herein, user information or a verification method utilized for the user verification differs for each network environment. Thus, unless the user information or the verification method utilized for the user verification is changed in accordance with the network environment, appropriate user verification cannot be performed due to lack of information for the user verification or information for the user verification being utilized more than is necessary.

Therefore, in order to solve the problem described above, it is an object of the present invention to provide a user verification device and a user verification method that perform appropriate user verification in accordance with a network environment.

### Solution to Problem

In order to solve the problem described above, a user verification device of the present invention is a user verification device that processes user verification of a communication device switching between at least two types of networks to perform communication, including storage means for storing a verification method and user information utilized for user verification, receiving means for receiving a request for user verification, network type determining means for determining a network type that the communication device uses for communication when the request for user verification is received by the receiving means, location information acquiring means for acquiring location information of the communication device when the request for user verification is received by the receiving means, verification method extracting means for extracting the verification method stored in the storage means based on the network type determined by the network type determining means, user information extracting means for extracting the user information stored in the storage means based on the network type determined by the network type determining means and the location information acquired by the location information acquiring means, and processing means for processing user verification based on the verification method extracted by the verification method extracting means and the user information extracted by the user information extracting means.

A user verification method of the present invention includes a storing step in which a user verification device that processes user verification of a communication device switching between at least two types of networks to perform communication stores a verification method and user information utilized for user verification, a receiving step in which the user verification device receives a request for user verification, a network type determining step in which the user verification device determines a network type that the communication device uses for communication when the request for user verification is received in the receiving step, a location information acquiring step in which the user verification device acquires location information of the communication device when the request for user verification is received in the receiving step, a verification method extracting step in which the user verification device extracts the verification method stored in the storing step based on the network type determined in the network type determining step, a user information extracting step in which the user verification device extracts the user information stored in the storing step based on the network type determined in the network type determining step and the location information acquired in the location information acquiring step, and a processing step in which the user verification device processes user verification based on the verification method extracted in the verification method extracting step and the user information extracted in the user information extracting step.

According to this invention, the user verification device that processes user verification of the communication device switching between at least two types of networks to perform communication stores the verification method and the user information utilized for user verification. Upon receiving the request for user verification, the user verification device determines the network type that the communication device uses for communication and acquires the location information of the communication device. The user verification device extracts the stored verification method based on the determined network type and extracts the stored user information based on the determined network type and the acquired location information. The user verification device processes user verification, based on the extracted verification method and user information. Accordingly, the user verification device of the present invention can process user verification of the communication device using the verification method and the user information that are based on the network type that the user verification device uses for communication, the location information of the communication device, and the like. That is, the user verification device of the present invention can perform appropriate user verification in accordance with the network environment.

In the user verification device of the present invention, it is preferable that the user information extracting means change the type or the number of pieces of the user information to be extracted, based on the network type determined by the network type determining means and the location information acquired by the location information acquiring means.

According to this invention, the type or the number of pieces of the user information to be extracted is changed, based on the determined network type and the acquired location information. Accordingly, the user verification device of the present invention can perform appropriate user verification in accordance with the network environment.

In the user verification device of the present invention, it is preferable that the user verification device be a mobile phone and the user information stored in the storage means include any one of a subscriber identifier, a production number of the mobile phone, verification information provided by a mobile phone carrier, and verification information that a user sets for network connection.

According to this invention, the user verification device is a mobile phone, and the stored user information includes any one of the subscriber identifier, the production number of the mobile phone, the verification information provided by a mobile phone carrier, and the verification information that a user sets for network connection. Accordingly, the user verification device of the present invention can perform appropriate user verification using the information described above concerning verification of the mobile phone in accordance with the network environment.

In the user verification device of the present invention, it is preferable that the verification method extracting means change a communication protocol utilized for user verification, based on the network type determined by the network type determining means.

According to the present invention, the communication protocol utilized for user verification is changed, based on the determined network type. Accordingly, the user verification device of the present invention can perform appropriate user verification in accordance with the network environment.

### Advantageous Effects of Invention

With the present invention, appropriate user verification in accordance with the network environment can be performed.

### Brief Description of Drawings

[FIG. 1] A configuration diagram showing a system configuration including a user verification device of this embodiment.
[FIG. 2] A function block diagram showing the function of the user verification device of this embodiment.
[FIG 3] A hardware configuration diagram of the user verification device of this embodiment.
[FIG. 4] A diagram showing an example of a verification method and user information stored in a storage module of this embodiment, in the case where the network type is a 3G network.
[FIG. 5] A diagram showing an example of the verification method and the user information stored in the storage module of this embodiment, in the case where the network type is a wireless LAN.
[FIG. 6] A flowchart diagram showing a process of the user verification device of this embodiment.

### Description of Embodiments

An embodiment of the present invention will be described below with reference to the accompanying drawings. In cases where possible, the same portions are denoted by the same reference signs, and redundant descriptions are omitted.

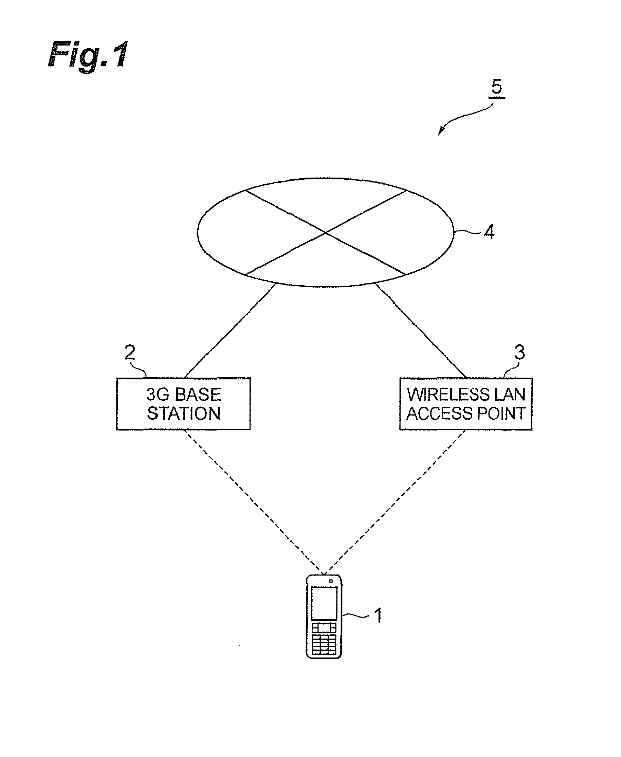

FIG. 1 is a schematic diagram of a communication device 5 including a user verification device 1 according to this embodiment. As shown in FIG. 1, the communication device 5 is configured to include the user verification device 1, a 3G base station 2, a wireless LAN access point 3, and a public communication network 4. The user verification device 1 has a function of a mobile phone as a communication device that switches between at least two types of networks to perform communication, and processes user verification upon connection to the network. In this embodiment, the user verification device 1 switches between two types of networks, a 3G network and a wireless LAN, to perform communication. The 3G base station 2 forms the 3G network by performing 3rd Generation (3G) communication with the user verification device 1. The wireless LAN access point 3 forms the wireless LAN by performing wireless LAN communication with the user verification device 1. The 3G base station 2 and the wireless LAN access point 3 are connected with the public communication network 4, and the user verification device 1 can connect to the public communication network 4 via the 3G base station 2 or the wireless LAN access point 3.

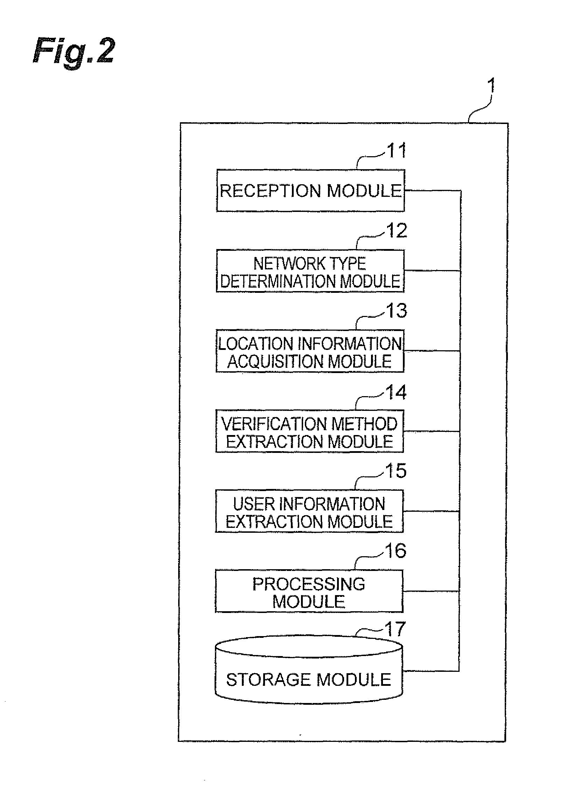

FIG. 2 is a function block diagram showing the configuration of the user verification device 1 of this embodiment. As shown in FIG. 2, this user verification device 1 is configured to include, as a functional configuration, a reception module 11 (receiving means), the network type determination module 12 (network type determining means), a location information acquisition module 13 (location information acquiring means), a verification method extraction module 14 (verification method extracting means), a user information extraction module 15 (user information extracting means), a processing module 16 (processing means), and a storage module 17 (storage means).

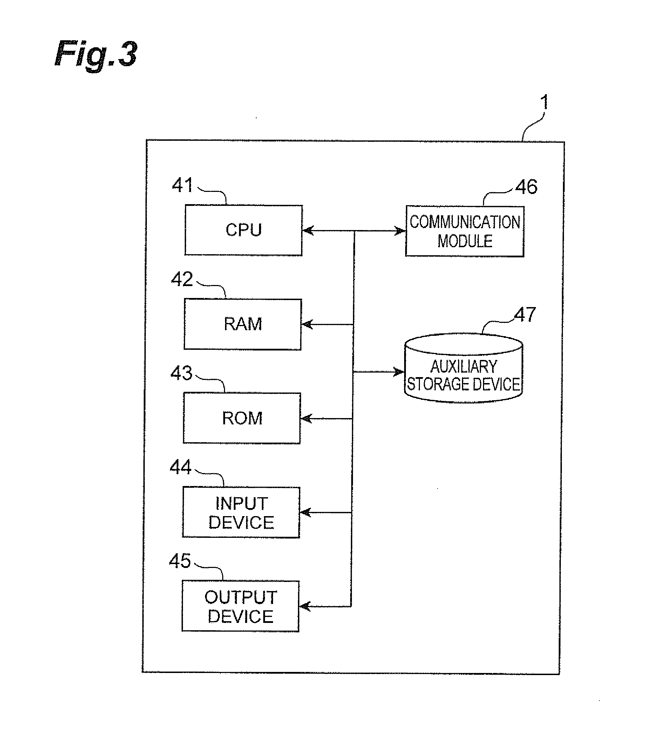

The user verification device 1 is configured of hardware such as a CPU. FIG. 3 is a hardware configuration diagram of the user verification device 1. As shown in FIG. 3, the user verification device 1 shown in FIG 2 is physically configured as a computer system including a CPU 41, a RAM 42 and a ROM 43 as a main storage device, an input device 44 such as a keyboard that is an input device, an output device 45 such as a display, a communication module 46 that is a data exchange device, an auxiliary storage device 47 such as a hard disk, and the like. The function of each function block shown in FIG 2 is achieved by loading predetermined computer software on hardware such as the CPU 41, the RAM 42, or the like shown in FIG. 3 to cause the input device 44, the output device 45, and the communication module 46 to operate under the control of the CPU 41 and by performing reading and writing of data in the RAM 42 or the auxiliary storage device 47.

Each function block of the user verification device 1 will be described below based on the function block shown in FIG. 2.

The reception module 11 receives a request for user verification from the network side. For example, when the user verification device 1 is to perform communication with the public communication network 4 via the 3G base station 2, the user verification device 1 receives the request for user verification for communication connection from the 3G base station 2.

The network type determination module 12 determines a network type that the user verification device 1 uses for communication, when the request for user verification is received by the reception module 11. For example, when the user verification device 1 is to perform communication with the public communication network 4 via the 3G base station 2 and the request for user verification for communication connection from the 3G base station 2 is received by the reception module 11, the network type determination module 12 determines the network type that the user verification device 1 uses for communication to be the 3G network. Also, for example, when the user verification device 1 is to perform communication with the public communication network 4 via the wireless LAN access point 3 and the request for user verification for communication connection from the wireless LAN access point 3 is received by the reception module 11, the network type determination module 12 determines the network type that the user verification device 1 uses for communication to be the wireless LAN. Note that other examples of the network type include Bluetooth and infrared communication.

In the case where the network type that the user verification device 1 uses for communication is designated in the request for user verification received by the reception module 11, the network type determination module 12 may determine the network type that the user verification device 1 uses for communication to be the designated network type. For example, it is assumed that, when the user verification device 1 is performing communication with the public communication network 4 via the wireless LAN access point 3, the reception module 11 receives the request for user verification for communication connection from the wireless LAN access point 3, and the 3G network has been designated in the request as the network type that the user verification device 1 uses for communication. In that case, the network type determination module 12 determines the network type that the user verification device 1 uses for communication to be the 3 G network. Note that, in order to perform user verification in the case where verification is performed with a network other than a network that the user verification device 1 is currently communicating through in this manner, the verification is performed after the network that is currently being communicated through is switched to the requested network in a communication device included in the user verification device 1.

The location information acquisition module 13 acquires location information of the user verification device 1, when the request for user verification is received by the reception module 11. For example, the location information acquisition module 13 acquires the location information (latitude and longitude on the ground) of the user verification device 1 utilizing a GPS function of the user verification device 1.

The verification method extraction module 14 extracts the verification method utilized for user verification that is stored in the storage module 17, based on the network type determined by the network type determination module 12. Examples of the verification method include combining user information utilized for user verification and communication protocol.

The verification method extraction module 14 may change the communication protocol utilized for user verification, based on the network type determined by the network type determination module 12. For example, in the case where the network type determined by the network type determination module 12 is a network that is maintaining a certain degree of security, the verification method extraction module 14 extracts HTTP as the communication protocol utilized for user verification. On the other hand, in the case where the network type determined by the network type determination module 12 is a network that is not maintaining a certain degree of security, the verification method extraction module 14 extracts HTTPS of which the degree of security is higher than that of HTTP as the communication protocol utilized for user verification.

The user information extraction module 15 extracts the user information utilized for user verification that is stored in the storage module 17, based on the network type determined by the network type determination module 12 and the location information acquired by the location information acquisition module 13. Examples of the user information include a subscriber identifier (International Mobile Subscriber Identity or IMSI), a production number of a mobile phone (International Mobile Equipment Identifier or IMEI), verification information (user ID) provided by a mobile phone carrier, and verification information (personal identification number or PIN) that a user sets for network connection. Note that the user ID and PIN are similar as being the verification information that a user utilizes, but the user ID is verification information that a mobile phone carrier assigns, whereas the PIN is verification information that a user sets on one's own.

The user information extraction module 15 may change the type or the number of pieces of the user information to be extracted, based on the network type determined by the network type determination module 12 and the location information acquired by the location information acquisition module 13. For example, in the case where the network type determined by the network type determination module 12 is a wireless LAN open to general users and the location information acquired by the location information acquisition module 13 indicates premises in which wireless LAN communication is permitted by a provider providing the wireless LAN, the user information extraction module 15 extracts user information designated by the provider providing the wireless LAN.

The processing module 16 processes user verification, based on the verification method extracted by the verification method extraction module 14 and the user information extracted by the user information extraction module 15. Processing of the user verification refers to, for example, the processing module 16 transmitting the user information according to the verification method to the 3G base station 2 that is a verification server and receiving a user verification result from the 3G base station 2.

The storage module 17 stores the verification method and the user information utilized for user verification. The user information stored in the storage module 17 may include any one of the subscriber identifier, the production number of a mobile phone, the verification information provided by a mobile phone carrier, and the verification information that a user sets for network connection.

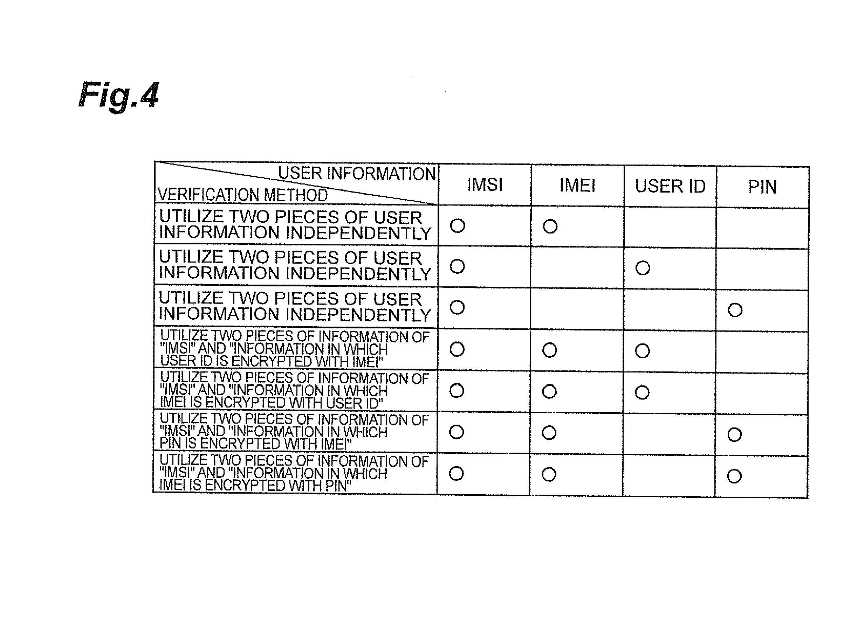

FIG 4 is a diagram showing an example of the verification method and the user information stored in the storage module 17, in the case where the network type is a 3G network. For example, in the case where the network type is determined to be a 3 G network by the network type determination module 12, the verification method extraction module 14 extracts any one verification method out of the verification methods shown in the first column in FIG. 4, which are "utilize two pieces of user information independently," "utilize two pieces of information of 'IMSI' and 'information in which user ID (verification information provided by mobile phone carrier) is encrypted with IMEI'," "utilized two pieces of information of 'IMSI' and 'information in which IMEI is encrypted with user ID'," "utilized two pieces of information of 'IMSI' and 'information in which PIN is encrypted with IMEI'," and "utilize two pieces of information of 'IMSI' and 'information in which IMEI is encrypted with PIN'".

For example, in the case where the network type is determined to be a 3G network by the network type determination module 12, the user information extraction module 15 extracts the user information utilized for user verification out of "IMSI," "IMEI," "user ID," and "PIN" that are the user information shown in the first row in FIG. 4. Because the network type is a 3G network, "IMSI" can be utilized as the user information. Herein, regarding "PIN" shown in FIG 4, a different "PIN" is associated with and stored for each predetermined area where the user verification device 1 is located. In the case where the user information extraction module 15 does not extract "PIN," the processing module 16 transmits the location information of the user verification device 1 acquired by the location information acquisition module 13 to the verification server that performs user verification such as the 3G base station 2 or the wireless LAN access point 3 and causes the verification server to determine whether to allow verification, upon processing the user verification. On the other hand, in the case where the user information extraction module 15 extracts "PIN," the user information extraction module 15 identifies the area where the user verification device 1 is located from the location information of the user verification device 1 acquired by the location information acquisition module 13 and extracts the PIN stored in the storage module 17 that is associated with the identified area.

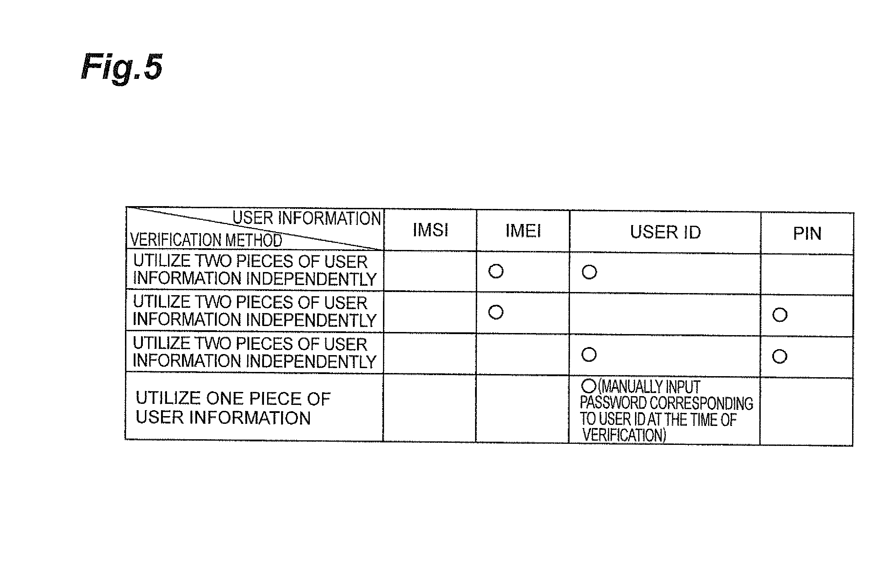

FIG. 5 is a diagram showing an example of the verification method and the user information stored in the storage module 17, in the case where the network type is a wireless LAN. For example, in the case where the network type is determined to be a wireless LAN by the network type determination module 12, the verification method extraction module 14 extracts any one verification method out of "utilized two pieces of user information independently" and "utilize one piece of user information" that are verification methods shown in the first column in FIG. 5.

For example, in the case where the network type is determined to be a wireless LAN by the network type determination module 12, the user information extraction module 15 extracts the user information utilized for user verification out of "IMEI," "user ID," and "PIN" that are the user information shown in the first row in FIG. 5. Because the network type is not a 3G network but a wireless LAN, "IMSI" cannot be utilized as the user information. Herein, regarding "PIN" shown in FIG. 5, a different "PIN" is associated with and stored for each predetermined area where the user verification device 1 is located. In the case where the user information extraction module 15 does not extract "PIN," the processing module 16 transmits the location information of the user verification device 1 acquired by the location information acquisition module 13 to the verification server that performs user verification such as the 3G base station 2 or the wireless LAN access point 3 and causes the verification server to determine whether to allow verification, upon processing the user verification. On the other hand, in the case where the user information extraction module 15 extracts "PIN," the user information extraction module 15 identifies the area where the user verification device 1 is located from the location information of the user verification device 1 acquired by the location information acquisition module 13 and extracts the PIN stored in the storage module 17 that is associated with the identified area.

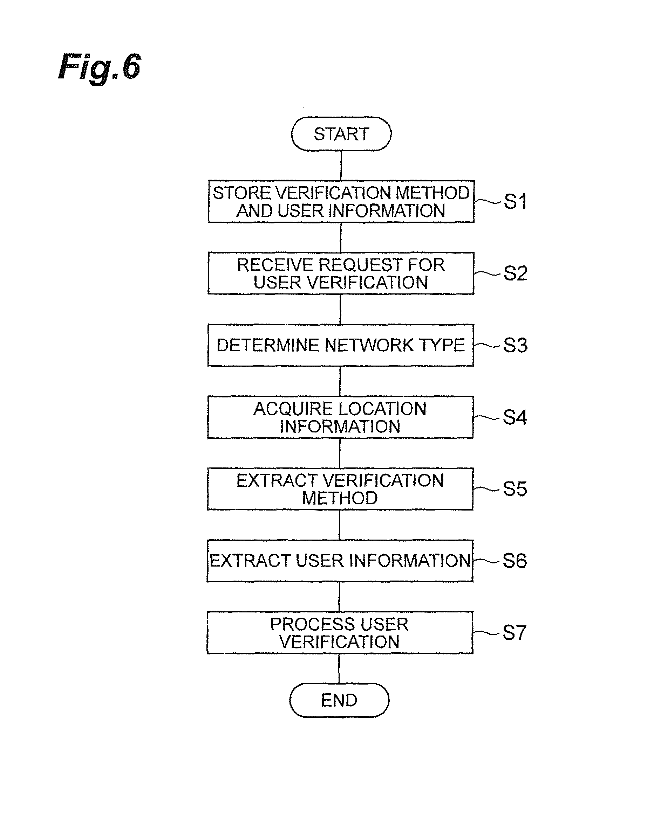

Next, a process of the user verification device 1 configured in this manner will be described. FIG. 6 is a flowchart showing the process of the user verification device 1. First, the storage module 17 stores the verification method and the user information utilized for user verification in advance (S1: storing step). Next, the reception module 11 receives the request for user verification (S2: receiving step). When the request for user verification is received in step S2, the network type determination module 12 determines the network type that the user verification device 1 uses for communication (S3: network type determining step). Also, when the request for user verification is received in step S2, the location information acquisition module 13 acquires the location information of the user verification device 1 (S4: location information acquiring step).

Next, the verification method extraction module 14 extracts the verification method stored in the storage module 17 in step S1, based on the network type determined in step S3 (S5: verification method extracting step). Next, the user information extraction module 15 extracts the user information stored in the storage module 17 in step S1, based on the network type determined in step S3 and the location information acquired in step S4 (S6: user information extracting step). Next, the processing module 16 processes user verification, based on the verification method extracted in step S5 and the user information extracted in step S6 (S7: processing step).

The order in the flowchart described above is not limiting. For example, the order of step S3 and step S4 may be reversed. Also, the order of step S5 and step S6 may be reversed. Also, step S5 may be executed immediately after step S3.

Next, an effect of the user verification device 1 configured in this manner will be described. The user verification device 1 of this embodiment processes the user verification of the user verification device 1 that switches between at least two types of networks to perform communication, and stores the verification method and the user information utilized for user verification. Upon receiving the request for user verification, the user verification device 1 determines the network type that the user verification device 1 uses for communication and acquires the location information of the user verification device 1. The user verification device 1 extracts the stored verification method based on the determined network type and extracts the stored user information based on the determined network type and the acquired location information. The user verification device 1 processes user verification, based on the extracted verification method and user information. Accordingly, the user verification device 1 can process user verification of the user verification device 1 using the verification method and the user information that are based on the network type that the user verification device 1 uses for communication, the location information of the user verification device 1, and the like. That is, the user authentication device 1 can perform appropriate user verification in accordance with the network environment.

The user authentication device 1 changes the type or the number of pieces of the user information to be extracted, based on the determined network type and the acquired location information. Accordingly, the user verification device 1 can perform appropriate user verification in accordance with the network environment.

The user information stored in the user verification device 1 includes any one of the subscriber identifier, the production number of a mobile phone, the verification information provided by a mobile phone carrier, and the verification information that a user sets for network connection. Accordingly, the user verification device 1 can perform appropriate user verification using the information described above concerning the verification of the user verification device 1 in accordance with the network environment.

The user verification device 1 changes the communication protocol utilized for user verification, based on the determined network type. Accordingly, the user verification device 1 can perform appropriate user verification in accordance with the network environment.

By changing the verification method or the user information based on the network type or the location information, the user verification device 1 can not only perform appropriate user verification in accordance with the network environment but also increase the security in user verification. For example, it is assumed that a malicious third party has stolen a PIN that is one piece of the user information in FIG. 4 of the user verification device 1 and is associated with, for example, an area A, and has caused a user verification device X that is a different user verification device to store that PIN. In the case of performing user verification utilizing user information other than a PIN, or in the case of performing user verification while the location of the user verification X is outside the area A or the like even in the case of performing user verification utilizing a PIN is performed at this time, the malicious third party cannot perform user verification utilizing the stolen PIN, and spoofing can be prevented.

Although the user verification device 1 has been described to have a function of a mobile phone as a communication device that switches between at least two types of networks to perform communication in the embodiment described above, this is not limiting. For example, it may be such that the user verification device 1 and a mobile phone as a communication device that switches between at least two networks to perform communication are each independent devices, and the user verification device 1 processes user verification of the mobile phone through input and output of various instructions via communication between the user verification device 1 and the mobile phone.

Although the user verification device 1 has been described to process user verification utilizing one particular network type in the embodiment described above, this is not limiting. For example, it may be such that, in a first stage of verification, an IMEI is transmitted to the verification server from the user verification device 1, the verification server transmits (through a 3G network) an SMS message including a pass code in an IMSI corresponding to the IMEI to the user verification device 1, the user verification device 1 sends the pass code via a wireless LAN to the verification server, and the verification server matches the IMEI received earlier and the pass code for verification to perform verification.

Although the user verification device 1 has been described to process user verification utilizing one particular network type in the embodiment described above, this is not limiting. For example, in the case where the user verification device 1 can communicate simultaneously with a plurality of networks, it may be such that the user verification device 1 processes user verification with the networks so that the user verification device 1 can communicate with the networks simultaneously.

### Reference Signs List

1... User verification device, 11... Reception module, 12... Network type determination module, 13... Location information acquisition module, 14... Verification method extraction module, 15... User information extraction module, 16... Processing module, 17... Storage module.

## Claims

1. A user verification device that processes user verification of a communication device switching between at least two types of networks to perform communication, the user verification device comprising:
storage means for storing a verification method and user information utilized for user verification;
receiving means for receiving a request for user verification;
network type determining means for determining a network type that the communication device uses for communication when the request for user verification is received by the receiving means;
location information acquiring means for acquiring location information of the communication device when the request for user verification is received by the receiving means;
verification method extracting means for extracting the verification method stored in the storage means based on the network type determined by the network type determining means;
user information extracting means for extracting the user information stored in the storage means based on the network type determined by the network type determining means and the location information acquired by the location information acquiring means; and
processing means for processing user verification based on the verification method extracted by the verification method extracting means and the user information extracted by the user information extracting means.

2. The user verification device according to claim 1, wherein the user information extracting means changes the type or the number of pieces of the user information to be extracted, based on the network type determined by the network type determining means and the location information acquired by the location information acquiring means.

3. The user verification device according to claim 1 or 2, wherein the user verification device is a mobile phone and the user information stored in the storage means includes any one of a subscriber identifier, a production number of the mobile phone, verification information provided by a mobile phone carrier, and verification information that a user sets for network connection.

4. The user verification device according to any one of claims 1 to 3, wherein the verification method extracting means changes a communication protocol utilized for user verification, based on the network type determined by the network type determining means.

5. A user verification method comprising:
a storing step in which a user verification device that processes user verification of a communication device switching between at least two types of networks to perform communication stores a verification method and user information utilized for user verification;
a receiving step in which the user verification device receives a request for user verification;
a network type determining step in which the user verification device determines a network type that the communication device uses for communication when the request for user verification is received in the receiving step;
a location information acquiring step in which the user verification device acquires location information of the communication device when the request for user verification is received in the receiving step;
a verification method extracting step in which the user verification device extracts the verification method stored in the storing step based on the network type determined in the network type determining step;
a user information extracting step in which the user verification device extracts the user information stored in the storing step based on the network type determined in the network type determining step and the location information acquired in the location information acquiring step; and
a processing step in which the user verification device processes user verification based on the verification method extracted in the verification method extracting step and the user information extracted in the user information extracting step.
